# EUROPÄISCHE PATENTSCHRIFT

(11) **EP 1 279 218 B1**
(45) Veröffentlichungstag und Bekanntmachung des Hinweises auf die Patenterteilung: **11.05.2011**
(21) Anmeldenummer: 01933776.5
(22) Anmeldetag: 29.03.2001
(51) Int. Cl.: H02K 19/10, H02K 1/14, H02K 1/24, H02P 25/08, H02P 6/00

(54) **VERFAHREN ZUR REGELUNG EINES RELUKTANZMOTORS**
METHOD FOR CONTROLLING A RELUCTANCE MOTOR
PROCEDE DE CONTRÔLE D'UN MOTEUR A RELUCTANCE

(30) Priorität: 01.04.2000 DE 10016396; 21.07.2000 DE 10035540
(43) Veröffentlichungstag der Anmeldung: 29.01.2003
(60) Teilanmeldung: 08155792.8
(73) Patentinhaber: Vorwerk & Co. Interholding GmbH, 42275 Wuppertal (DE)
(72) Erfinder: CALDEWEY, Uwe, 44229 Dortmund (DE); SCHIFFARTH, Markus, D-58332 Schwelm (DE); SCHMITZ, Volker, 42651 Solingen (DE); HILGERS, Stefan, 45357 Essen (DE)
(74) Vertreter: Müller, Enno
(86) Internationale Anmeldenummer: PCT/EP2001/003596
(87) Internationale Veröffentlichungsnummer: WO 2001/076044

(56) Entgegenhaltungen:
- EP-A- 0 668 652
- EP-A- 0 713 282
- EP-A- 0 952 658
- WO-A-97/50171
- DE-A- 3 905 997
- DE-A- 19 704 576
- FR-A- 2 590 423
- GB-A- 2 319 908
- US-A- 5 789 883
- US-A- 5 877 572

## Beschreibung

Die Erfindung betrifft ein Verfahren zur Regelung eines Reluktanzmotors mit einem Rotor und einem Stator, wobei der Stator einzelne Statorspulen aufweist und je nach Belastung des Motors ein vordefinierter Strom in den Spulen fließt.

Bei geschalteten Reluktanzmotoren, welche allgemein bekannt sind, hängt die Größe des Drehmomentes von der Lage des Rotors zum Statorfeld ab. Um das maximale Moment im Motor zu erreichen, müssen die Statorströme und damit das Statorfeld abhängig von der Rotorlage gesteuert werden.

Aus der WO97/50171 A ist ein Verfahren zum Steuern eines wechselstrombetriebenen elektrischen Motorgenerators bekannt, bei welchen in Abhängigkeit von der Umdrehungszahl des Rotors verschiedene Regelverfahren angewandt. Aus der FR 2 590 423 A ist ein Verfahren zur Regelung des Anlaufvorganges eines Elektromotors bekannt. Während der Startphase des Motors wird immer zumindest eine Spule bestromt.

Im Hinblick auf den genannten Stand der Technik stellt sich der Erfindung die Aufgabe, einen Reluktanzmotor hinsichtlich seines Anlaufverhaltens in vorteilhafter Weise weiterzubilden.

Diese Aufgabe ist beim Gegenstand des Anspruches 1 gelöst, wobei darauf abgestellt ist, dass abhängig von der Umdrehungszahl des Rotors unterschiedliche Regelverfahren angewendet werden, nämlich bei kleineren Umdrehungszahlen durch die Vorgabe eines festen Drehfeldes, wobei bei Anlaufen des Motors bei Einleitung einer Rückdrehung des Rotors, die durch die Steuerungselektronik mittels für jede Phase vorhandener Lagegeber erkannt wird, keine Phase mehr bestromt wird und durch eine Elektronik ein erneuter Anlaufvorgang eingeleitet wird. Zufolge dessen, wird nach Erkennen einer Rückdrehung des Rotors durch die Elektronik ein erneuter Anlaufvorgang eingeleitet. Hierdurch ist eine Verbesserung des Anlaufverhaltens erreicht. Insbesondere wird das Schwingen an einem Phasenumschaltpunkt zuverlässig unterdrückt. Auch ist vorgesehen, dass abhängig von der Umdrehungszahl des Rotors unterschiedliche Regelverfahren angewendet werden, nämlich bei kleineren Umdrehungszahlen durch die Vorgabe eines festen Drehfeldes. Insbesondere bei Reluktanzmotoren, welche einen großen Drehzahlbereich aufweisen, ist es nicht mehr ausreichend ein Standardregelverfahren zu verwenden. Vielmehr ist eine bereichsabhängige Regelung erforderlich. Besonders bei sehr niedrigen Drehzahlen von beispielsweise ca. 100 Umdrehungen pro Minute erweist sich die Vorgabe eines festen Drehfeldes als vorteilhaft. Bei höheren Drehzahlen von beispielsweise größer 400 Umdrehungen pro Minute wird erfindungsgemäß ein Stromhysterese-Regelverfahren angewendet, wobei weiter eine Anpassung der Regelparameter bevorzugt wird. Als besonders vorteilhaft erweist sich weiter, dass bei Vorgabe eines Drehfeldes die Anpassung des Rotorstromes bzw. dessen Reduktion auf einen hinreichend großen Wert erfolgt. Bei höheren Umdrehungszahlen des Reluktanzmotors ist vorgesehen, dass beim hierbei angewendeten Stromhysterese-Regelverfahren ein Ein- und Abschalten der Wicklungen mittels die Rotorstellung erkennenden Sensoren erfolgt. Weiter kann hinsichtlich des Stromhysterese-Regelverfahrens vorgesehen sein, dass der vordefinierte Strom durch Aufprägung einer konstanten Spannung erreicht wird und dass bei Aufprägung der Spannung die Zeit bis zum Erreichen des maximalen Stromwertes gemessen wird, als Maß der Belastung des Motors. Die Induktivität einer Statorspule ist u. a. abhängig vom Luftspalt zwischen Rotor und Stator. Hieraus ergibt sich eine ständige Änderung der Induktivität bei einer Drehung des Rotors. Bei Belastung verschiebt sich der Winkel zwischen Rotor und Statorfeld, was eine Verringerung der Induktivität in der Statorspule beim Einschalten der Spannung zur Folge hat. Diese Änderung wird beim Stromhysterese-Regelverfahren erfasst. Hierzu wird weiterhin vorgeschlagen, dass der vordefinierte Strom durch Aus- und Einschalten einer positiven Spannung beibehalten wird. Der Strom in der Statorspule wird bevorzugt nach dem Pulsweiten-Modulationsverfahren gesteuert. Bei diesem Verfahren werden die Spulen abwechselnd auf eine positive und negative konstante Spannung geschaltet. Der Strom erhöht sich mit der positiven Spannung und senkt sich umgekehrt mit der negativen Spannung ab. Aus dem Taktverhältnis zwischen Stromerhöhung und -absenkung ergibt sich die resultierende gewünschte Stromhöhe in der jeweiligen Spule. Im vorliegenden Stromhysterese-Regelverfahren wird ein Strom in einer definierten Höhe eingeprägt, indem die positive Spannung so lange auf die Spule geschaltet wird, bis ein Maximalwert überschritten wird. Hiernach wird die Spannung abwechselnd aus- und eingeschaltet, um den vordefinierten Stromwert zu erhalten. Die Zeit, die vom Einschalten der Spannung bis zum Erreichen des maximalen Wertes vergeht, ist von der Induktiviät abhängig. Bei Belastung verringert sich die Induktivität im Einschaltzeitpunkt. Aus dieser Veränderung kann die Belastung des Motors zwischen dem Einschalten der Spannung und dem Signal, dass der Maximalstrom erreicht ist, bestimmt werden. In einer Weiterbildung des Verfahrens ist vorgesehen, dass bei Erreichen eines Grenzstromes zur Verhinderung einer Motorüberlastung eine Drehzahlverringerung erfolgt. Danach erfolgt die Drehzahlverringerung bevorzugt bei einem solchen maximalen Stromwert, der speziell auch eine Obergrenze der Belastbarkeit markiert und insofern als Grenzstrom bezeichnet wird. Um eine Überlastung des Motors zu vermeiden, kann demzufolge bei zu hoher Last die Drehzahl reduziert werden. Weiter wird vorgeschlagen, dass die Zeitmessung durch Starten eines internen Zählers beim Einschalten der Spannung und Anhalten des Zählers bei Überschreiten eines maximalen Stromwertes erfolgt. Diese Zeitmessung kann in einfachster Weise durch eine Mikrokontroller-Steuerung realisiert sein. Hierbei erweist es sich weiter als vorteilhaft, dass, ausgelöst durch Erreichen eines Minimal-Zählerwertes, eine Drehzahlreduzierung gesteuert wird. Darüber hinaus wird vorgeschlagen, dass eine Steuerung der Statorströme abhängig von der gemessenen Zeit erfolgt, wobei weiter der vordefinierte Strom veränderbar ist. Zudem wird vorgeschlagen, dass der vordefinierte Strom stufenlos veränderbar ist, sowie dass die Steuerung der Statorströme mittels eines Umrichters erfolgt. Hinsichtlich der vorbeschriebenen Ausführung eines Stromhysterese-Regelverfahrens wird im Weiteren auf die DE-A1 198 25 926 verwiesen. Zur Positionserfassung der Rotorstellung ist in einer vorteilhaften Weiterbildung des Verfahrens vorgesehen, dass die Rotorstellung mittels einer Reflexlichtschranke ermittelt wird, wobei die Lichtquelle im Stator angeordnet ist und durch Ausrichtung auf den Rotor unmittelbar die Reflexion des Rotors zur Messung genutzt wird. Für jede Phase ist ein Lagegeber vorhanden bspw. bei einem dreiphasigen Motor entsprechend drei Lagesensoren. Zur Detektierung der Position können Reflexlichtschranken verwendet werden. In vorteilhafter Weise sind diese Reflexlichtschranken direkt auf den Rotor gerichtet, so dass Toleranzen einer Geberscheibe und deren Winkelversatz automatisch eliminiert werden. Beim Anlaufen des Reluktanzmotors kann es in Abhängigkeit vom Belastungsmoment zu Schwingungen kommen. Dies tritt auf, sobald von der einen auf die nächste Phase umgeschaltet wird. Ist das Belastungsmoment groß, wird die neue Position nicht erreicht; vielmehr wird der Rotor durch die Gegenkraft zurückgedreht. Aufgrund der geringen Masse des Rotors kann es daher zum Schwingen zwischen diesen beiden Zuständen kommen. Seitens der Regelelektronik wird das rückwärts Drehen des Rotors erkannt.

Nachstehend ist die Erfindung anhand der beigefügten Zeichnung, welche lediglich Ausführungsbeispiele darstellt, näher erläutert. Es zeigt:
- Fig. 1: eine Seitenansicht eines Rotors für einen erfindungsgemäßen Re- luktanzmotor;
- Fig. 2: eine Seitenansicht eines, dem Rotor gemäß Fig. 1 zuordbaren Auskleidungsteiles;
- Fig. 3: eine Seitenansicht eines weiteren mit dem Auskleidungsteil ge- mäß Fig. 2 axial zusammensteckbaren Auskleidungsteiles zur An- ordnung an dem Rotor gemäß Fig. 1;
- Fig. 4: die Stirnansicht gegen den Rotor;
- Fig. 5: die Stirnansicht gegen das Auskleidungsteil gemäß Fig. 2;
- Fig. 6: die Stirnansicht gegen das Auskleidungsteil gemäß Fig. 3;
- Fig. 7: eine Zusammenbaudarstellung des mit den Auskleidungsteilen versehenen Rotors;

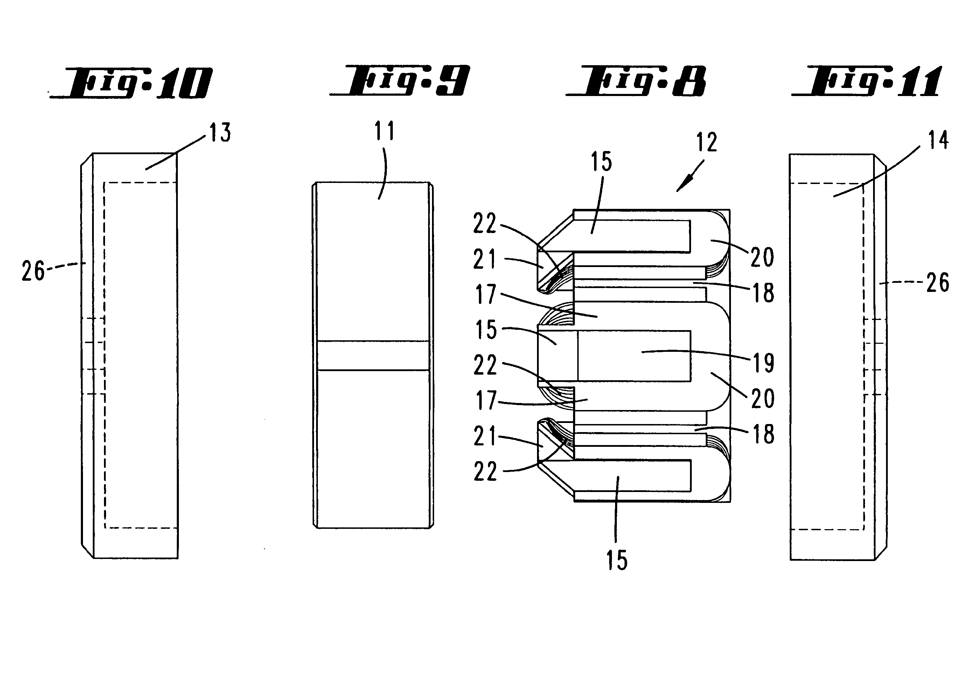

- Fig. 8: eine Seitenansicht eines mit Statorspulen versehenen Statorab- deckkörpers;
- Fig. 9: eine Seitenansicht eines Statorkerns;
- Fig. 10: eine Seitenansicht eines mit dem Statorkern und dem Statorab- deckkörper zuordbaren Lagerunterteiles;
- Fig. 11: die Seitenansicht eines Lageroberteiles;

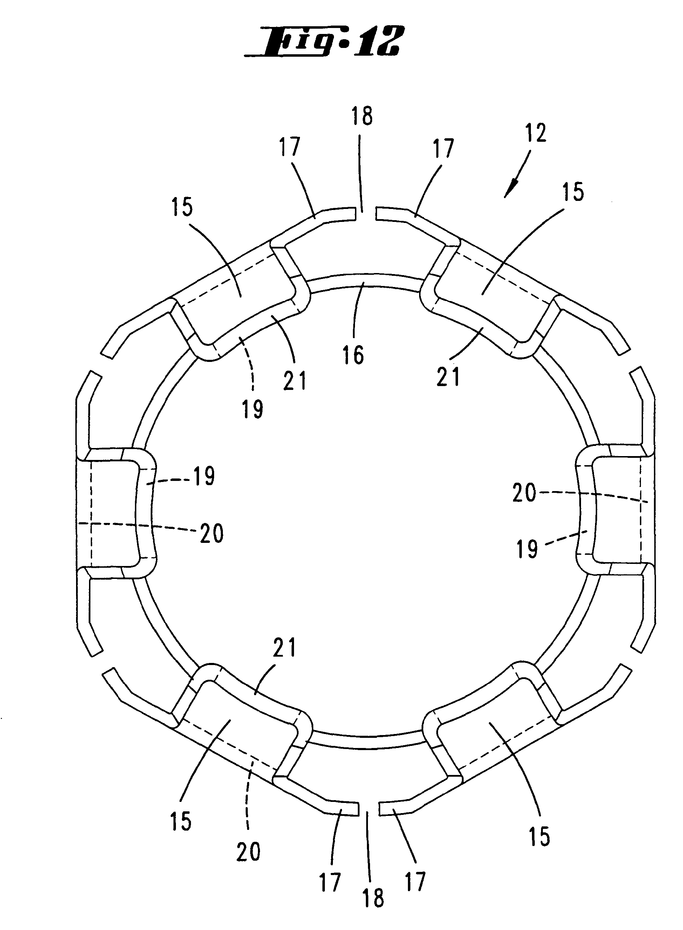

- Fig. 12: die Stirnansicht gegen den Statorabdeckkörper;
- Fig. 13: eine der Fig. 12 entsprechende Darstellung, jedoch nach Anord- nung von Statorspulen auf den Statorabdeckkörper;
- Fig. 14: die Stirnansicht gegen den, mit den Wicklungen versehenen Sta- torabdeckkörper nach Einsetzen desselben in den Statorkern;
- Fig. 15: die Rückansicht gegen den, in den Statorkern eingeschobenen, Wicklungen aufweisenden Statorabdeckkörper, bei in den Stator eingeführtem Rotor;

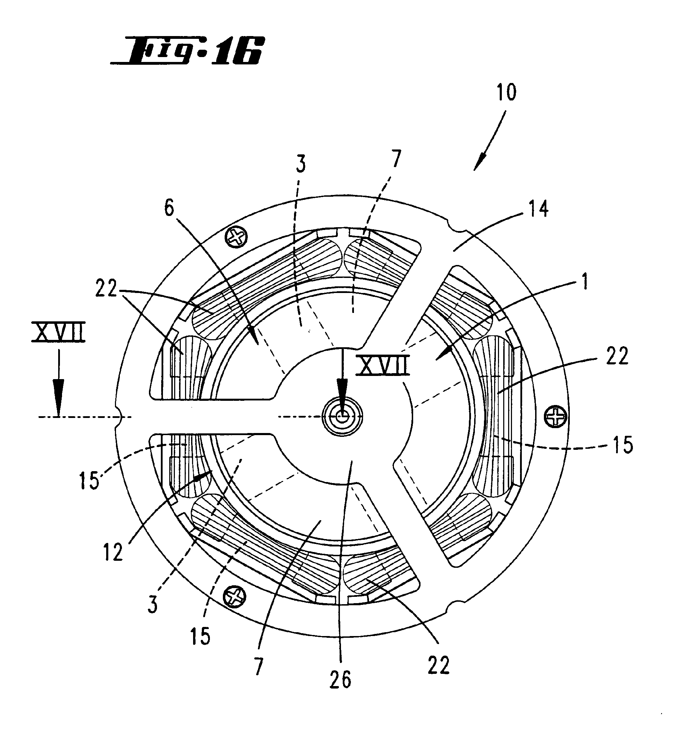

- Fig. 16: eine der Fig. 15 entsprechende Darstellung, jedoch nach vollstän- diger Montage des Reluktanzmotors, d.h. nach Anordnung der Lagerunter- und oberteile;

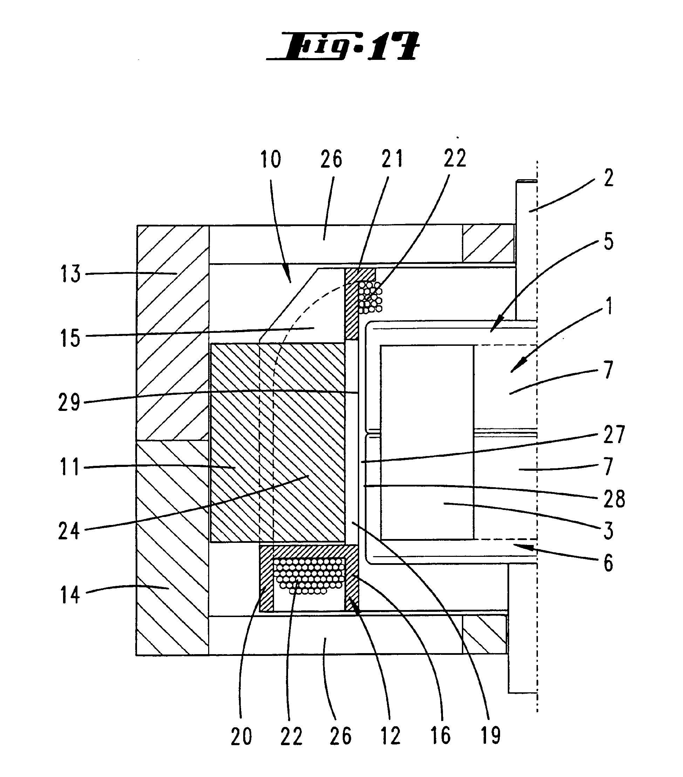

- Fig. 17: den Schnitt gemäß der Linie XVII-XVII in Fig. 16;
- Fig. 18: eine der Fig. 17 entsprechende Schnittdarstellung, jedoch eine wei- tere Ausführungsform betreffend;
- Fig. 19: eine perspektivische Darstellung eines Rotors, eine weitere Aus- führungsform betreffend;
- Fig. 20: eine perspektivische Darstellung eines Stators in einer weiteren Ausführungsform mit einem Rotor gemäß der Ausführungsform in Fig. 19;
- Fig. 21: eine der Fig. 20 entsprechende Darstellung, nach Anordnung einer Leiterplatte;
- Fig. 22: die Leiterplatte in einer Einzeldarstellung mit schematisch ange- deuteten Statorspulen;

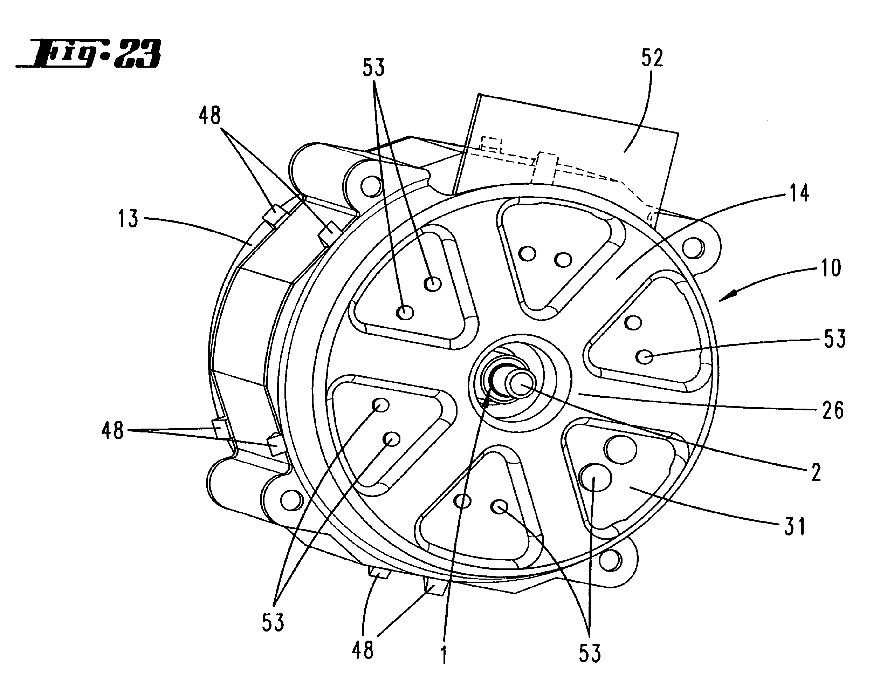

- Fig. 23: eine der Fig. 21 entsprechende Darstellung nach Anordnung von Lagerbrücken für den Rotor.

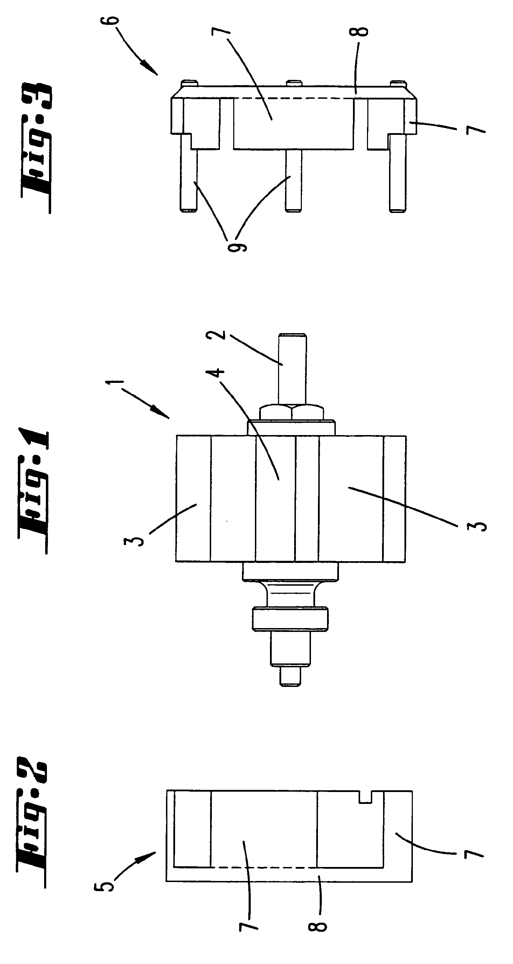

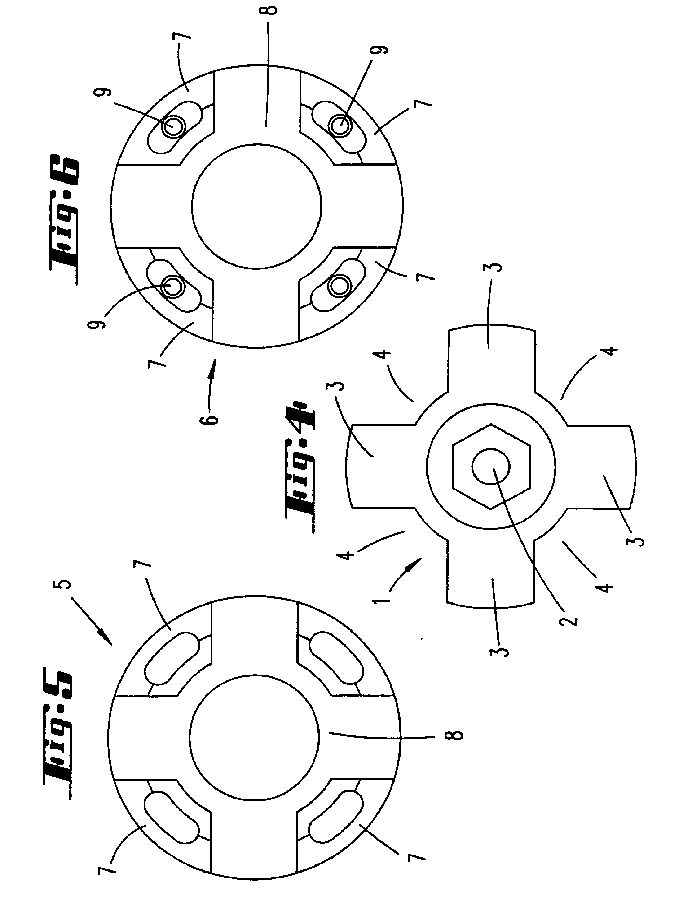

Dargestellt und beschrieben ist zunächst mit Bezug zu Fig. 1 ein Rotor 1 mit einem Rotorachskörper 2 und vier winkelgleichmäßig um den Rotorachskörper angeordneten Rotorsegmenten 3, wobei gemäß Fig. 4 zwischen den Rotorsegmenten 3 Freiräume 4 verbleiben.

Zur Reduzierung der Schallemission werden zur Schaffung eines Zylinderkörpers die Zwischenräume 4 zwischen den flügelartigen Rotorsegmenten 3 ausgefüllt. Hierzu sind zwei axial zusammensteckbare Auskleidungsteile 5, 6 vorgesehen, wobei jedes Auskleidungsteil 5, 6 entsprechend dem Querschnitt der Zwischenräume 4 ausgebildete Füllsegmente 7 aufweist.

Wie aus den Einzeldarstellungen zu erkennen, sind die Auskleidungsteile 5, 6 topfartig ausgebildet, mit einem Kreisscheibenteil 8 und vier von diesem sich erstreckenden Füllkörpersegmenten 7. Bevorzugt sind die Auskleidungsteile 5, 6 als Kunststoffteile, weiter bevorzugt als Kunststoffspritzteile ausgeformt.

Die beiden Auskleidungsteile 5, 6 werden, den Rotor 1 zwischen sich aufnehmend, über den Rotorachskörper 2 geschoben und axial mittels Schrauben 9 miteinander verspannt.

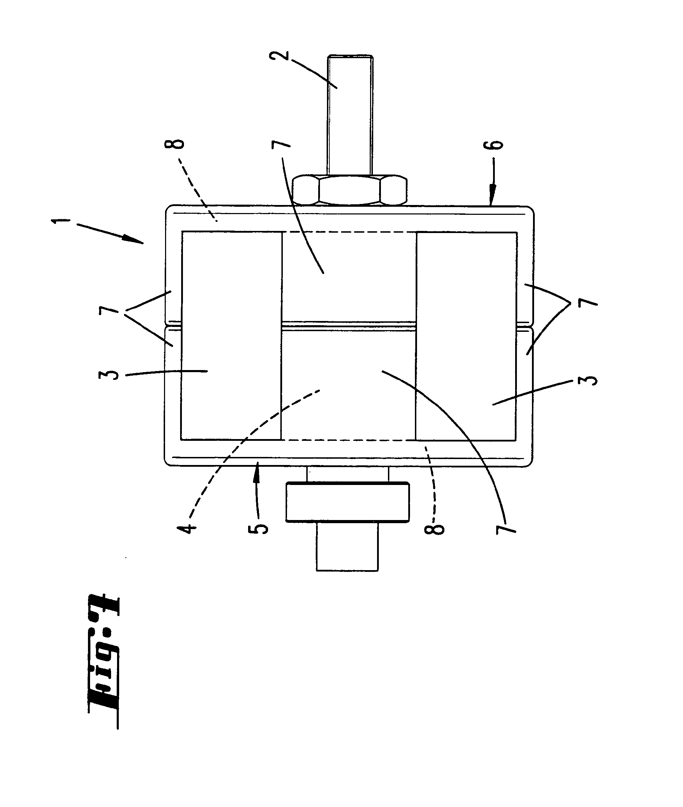

Hiernach ist ein Rotor 1 in Form eines Zylinderkörpers gemäß Fig. 7 geschaffen, wodurch Druckschwankungen bei Drehung des Rotors im Stator wirkungsvoll unterdrückt werden. Die Schallemission wird hierdurch deutlich reduziert. Die Füllkörpersegmente 7 lassen sich auch gleichzeitig zum Wuchten des Rotors 1 mit verwenden. Bei einer Ausgestaltung der Füllkörpersegmente 7 als Kunststoffspritzteile lassen sich in deren Oberflächen auch beliebige Formen bzw. Strukturen verwirklichen. Durch geeignete Ausbildung lässt sich auch eine Art Kühllüfter erzeugen.

Der Stator 10 des Reluktanzmotors setzt sich im Wesentlichen zusammen aus einem Statorkern 11, einem in letzteren einführbaren Statorabdeckkörper 12, einem Lagerunterteil 13 sowie einem Lageroberteil 14.

Der Statorkörper 12 ist im Wesentlichen als Hohlzylinder ausgebildet und weist eine der Spulenzahl entsprechende Anzahl von Wickelkernschuhen 15 auf, welche im Wesentlichen außenseitig eines zylindrischen Grundkörpers 16 parallel zur Körperachse des Statorabdeckkörpers 12 ausgerichtet angeordnet sind.

Die Wickelkernschuhe 15 besitzen über den Großteil ihrer in Achsrichtung gemessenen Länge etwa tangential abweisende Flügel 17, wobei die aufeinander zu weisenden Flügel 17 zweier benachbarter Wickelkernschuhe 15 zueinander beabstandet sind und einen Spalt 18 belassen.

Die Wickelkernschuhe 15 sind im Querschnitt im Wesentlichen U-förmig ausgebildet, wobei an den U-Stegen endseitig die nach tangential außen weisenden Flügel 17 angeordnet sind. Der die U-Stege verbindende U-Schenkel ist im Wesentlichen durch den Grundkörper 16 gebildet, wobei im Bereich der Wickelkernschuhe 15 der Grundkörper 16 bzw. der U-Schenkel eines jeden Wickelkernschuhs 15 einen Durchbruch in Form eines Fensters 19 aufweist. Zufolge dessen ist die U-Öffnung eines jeden Wickelkernschuhs 15 zum Inneren des Statorabdeckkörpers 12 hin erweitert.

Fußseitig ist ein jeder Wickelkernschuh 15 mit einem weiteren, gleich wie die Flügel 17 zum Grundkörper 16 radial beabstandeten, Flügel 20 versehen.

Diesem fußseitigen Flügel 20 gegenüberliegend ragt der zugeordnete Wickelkernschuh 15 in axialer Richtung über den Grundkörper 16 hinaus und bildet jeweils einen in das Statorabdeckkörper-Innere weisenden, abgewinkelten Wickelkopf 21 aus.

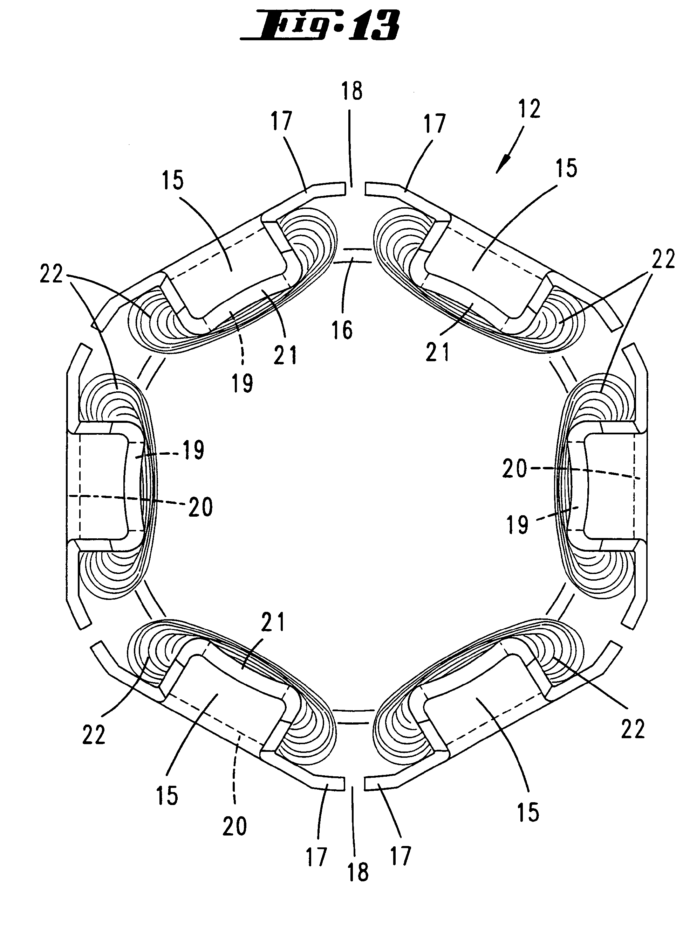

Zufolge dieser Ausgestaltung des Statorabdeckkörpers 12 dient dieser zunächst als Wickelkörper. Dieser wird ähnlich wie bei einem Rotor eines Universalmotors gewickelt. Die in einfachster Weise aufgewickelten Statorwicklungen 22 umfassen den jeweiligen Wickelkernschuh 15 im Bereich der an letzterem angeordneten Flügel 17 und 20, wobei diese Flügel 17, 20 zur sicheren Halterung der Statorwicklungen 22 auf dem Wickelkernschuh 15 dienen. Im Bereich des kopfseitigen Endes eines jeden Wickelkernschuhs 15 sind die Statorwicklungen 22 über den nach innen abgewinkelten Wickelkopf 21 geführt, wonach die Wicklungen 22 in das Innere des Statorabdeckkörpers 12 über den Innendurchmesser des Grundkörpers 16 hinaus vorragen (vgl. Fig. 13).

Neben dem Vorteil einer wesentlich vereinfachten Statorwickeltechnik ergibt sich der vorteilhafte Effekt, dass durch den Statorabdeckkörper 12 die Zwischenräume zwischen den Statorwicklungen 22 durch einen, vom Grundkörper 16 gebildeten Körper ausgefüllt sind, was zusätzlich zu der vorbeschriebenen Ausbildung des Rotors 1 als zylindrischer Körper zur Verringerung der Schallemission beiträgt.

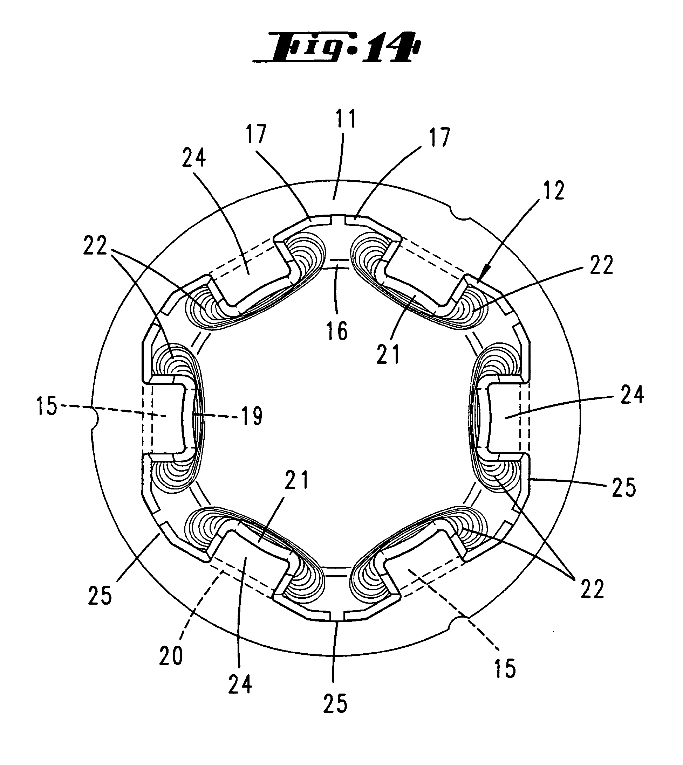

Der wie in Fig. 13 dargestellte, mit Statorwicklungen 22 versehene Statorabdeckkörper 12 wird in einfachster Weise einseitig in axialer Richtung in den Statorkern 11 eingeschoben derart, dass Wickelkerne 24 von der den Wickelkopf 21 aufweisenden Kopfseite der Wickelkernschuhe 15 ausgehend in die U-Räume der Wickelkernschuhe 15 eintauchen. Die von den Flügeln 17 begrenzten, von Statorwicklungen 22 durchsetzten Abschnitte des Statorabdeckkörpers 12 tauchen in entsprechend ausgebildete, parallel zur Körperachse ausgerichtete Freischnitte 25 des Statorkerns 11 ein (vgl. Fig. 14).

Durch die gewählte abgewinkelte Anordnung der Statorwicklung 22, bei welcher diese kopfseitig, über den Wickelkopf 21 geführt, in das Innere des Statorabdeckkörpers 12 hineinragen, ist das Einschieben des umwickelten Statorabdeckkörpers 12 in den Statorkern 11 ermöglicht.

Weiter kann, jedoch nicht dargestellt, der Statorabdeckkörper 12 einseitig angeformt oder angebracht eine Lageraufnahme in Form einer Brücke für den Rotor 1 aufweisen. Es besteht jedoch auch die Möglichkeit, wie dargestellt, das Lagerunterteil 13 oder das Lageroberteil 14 mit einer derartigen, eine Lageraufnahme aufweisenden Brücke 26 zu versehen.

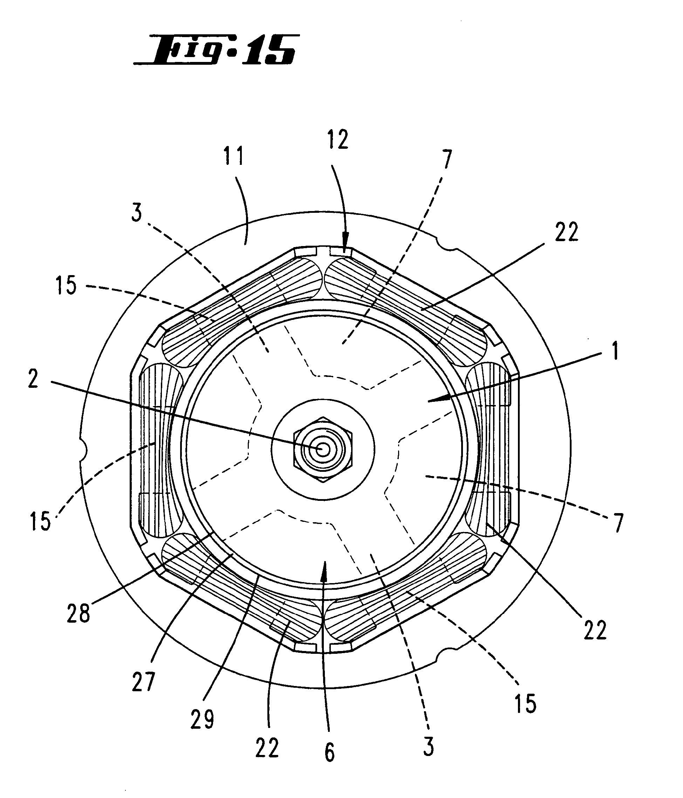

Wie aus der Darstellung in Fig. 15 zu erkennen, ist nach Einschieben des gemäß den Fig. 1 bis 7 zusammengesetzten Rotors 1 in das Innere des Statorabdeckkörpers 12 ein Ringraum 27 zwischen Rotoraußenfläche 28 und Statorinnenfläche 29 gebildet, wobei durch die Ausfüllung von Zwischenräumen zwischen den Statorwicklungen 22 bzw. zwischen den Rotorsegmenten 3 durch Füllsegmente 7 bzw. 16 jeweils eine im Wesentlichen glattflächige Oberfläche 28, 29 gebildet ist. Zufolge dessen ist sowohl die Rotoroberfläche 28 wie auch die Statorinnenfläche 29 homogenisiert, wodurch Druckschwankungen bei Drehung des Rotors 1 im Stator 10 wirkungsvoll unterdrückt werden.

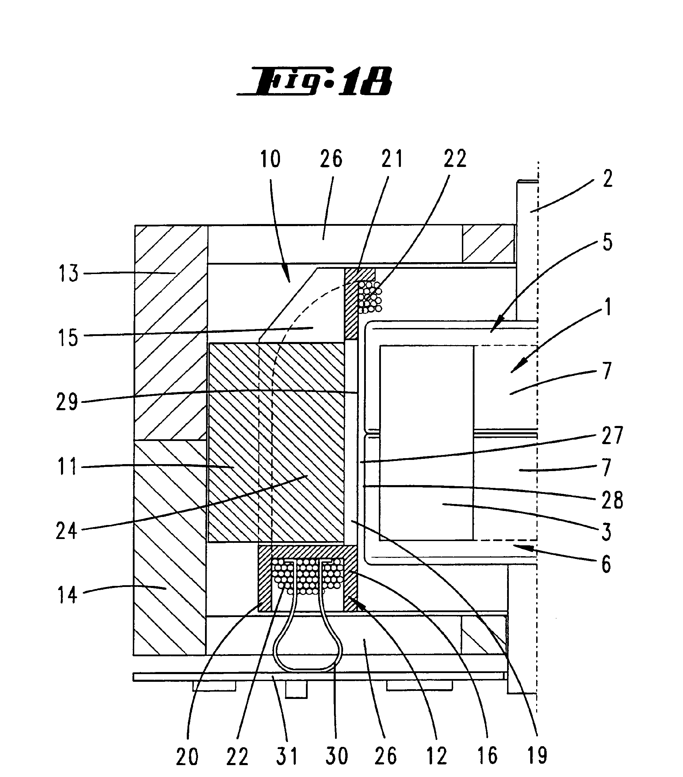

In Fig. 18 ist eine alternative Ausgestaltung dargestellt, bei welcher an einem Wickelkernschuh 15 ein Bügelfederkontakt 30 angebracht ist. Dargestellt ist eine fußseitige Anordnung des Bügelfederkontaktes 30 in einem durch den Flügel 20 und den Grundkörper 16 seitlich begrenzten, nach unten freien und von den Statorwicklungen 22 durchsetzten U-Raum. Der Bügelfederkontakt 30 ist entsprechend fußseitig unmittelbar von den Statorwicklungen 22 kontaktiert.

Oberseitig kontaktiert der Bügelfederkontakt 30 eine Leiterplatte 31, auf welcher Lagesensoren für den Rotor 1 und/oder eine Umrichtungselektronik zum links als auch rechts drehbaren Antreiben des Motors angeordnet ist.

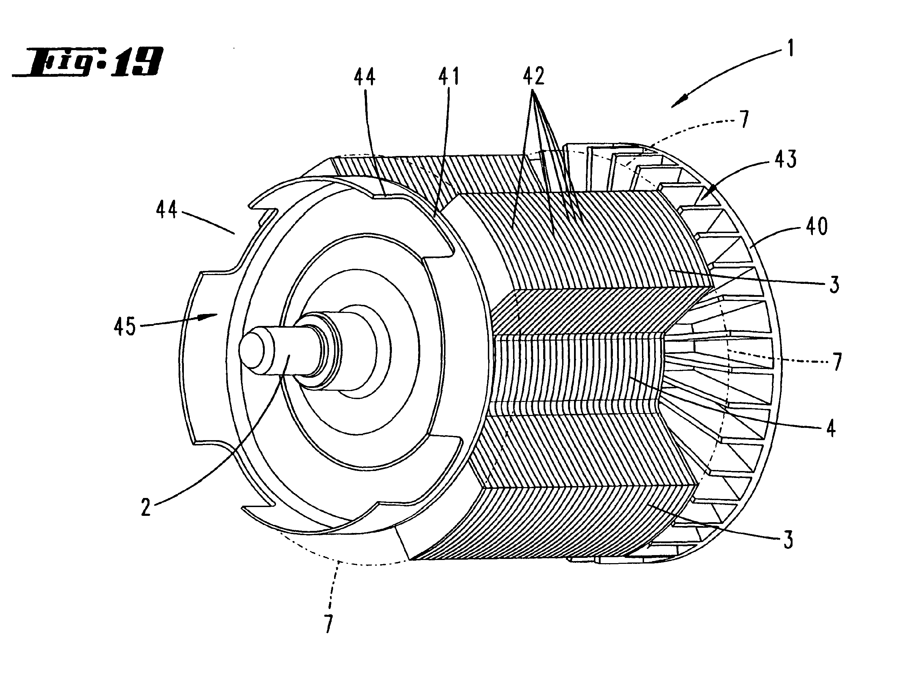

In Fig. 19 ist eine alternative Ausgestaltung des Rotors 1 dargestellt. Die Haltescheiben 40, 41, zwischen welchen die Rotorbleche 42 gefasst sind, übernehmen in dieser Ausführungsform jeweils eine Doppelfunktion. So ist die Haltescheibe 40 zugleich als Kühllüfter 43 ausgebildet, mit einem Durchmesser, welcher dem Rotordurchmesser im Bereich der Rotorsegmente 3 etwa entspricht.

Die diesem Kühllüfter 43 gegenüberliegende Haltescheibe 41 ist im Wesentlichen hohlzylindrisch ausgeformt, wobei im Bereich der Zylinderwandung Segmente 44 freigeschnitten sind. Hierdurch bildet die Haltescheibe 41 zugleich eine Geberscheibe 45 aus, zur Zusammenwirkung mit einer Lichtschranke, welche sich auf der Leiterplatte 31 befindet. Die Geberscheibe 45 besitzt hierbei eine eindeutig definierte Zuordnung zur Rotorposition. Da die Lage des Rotors 1 durch die Brücken 26 von Lagerunterteil 13 und Lageroberteil 14 eindeutig bestimmt ist, stellt sich der Abstand der Geberscheibe 45 zur Leiterplatte 31 ebenfalls automatisch ein.

Des Weiteren können auch bei dieser Ausführungsform die Zwischenräume 4 zwischen den flügelartigen Rotorsegmenten 3 mit, in Fig. 19 strichpunktiert angedeuteten Füllsegmenten 7 ausgefüllt sein.

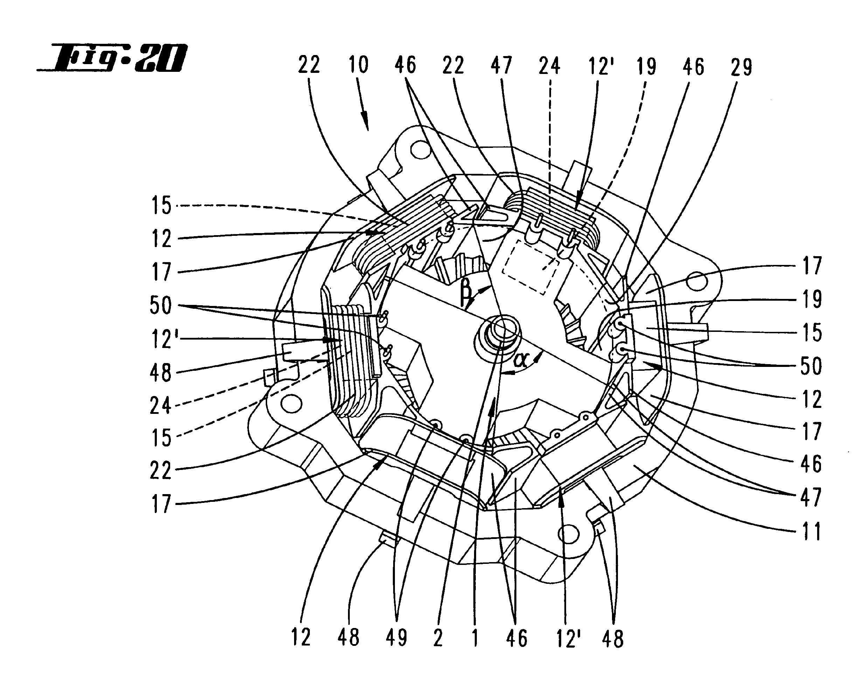

Eine weitere Ausführungsform zur Schaffung einer homogenen Statorinnenfläche 29 ist in der Fig. 20 dargestellt. Hierbei ist eine Mehrzahl von Statorabdeckkörpern 12, 12' vorgesehen, die sich rotorseitig im Wesentlichen zu einem Zylinder ergänzen. Jeder Statorabdeckkörper 12, 12' ist als Einzelwickelkörper ausgebildet, mit einem Wickelkernschuh 15. Letzterer besitzt in Richtung auf den Rotor 1 einen Durchbruch in Form eines Fensters 19, in welchem der Metallwickelkern rotorseitig freiliegt.

Des Weiteren ist der Statorabdeckkörper 12, 12' im Grundriss annähernd H-förmig ausgebildet, wobei der die H-Schenkel verbindende H-Steg durch den Wickelkernschuh 15 geformt ist. Die H-Schenkel bilden beidseitig des Wickelkernschuhs 15 Flügel 17 bzw. 46, in welchem hierdurch gebildeten Zwischenraum die Statorwicklungen 22 eingebracht werden.

Die Flügel 17 und 46 sind im Wesentlichen parallel zueinander ausgerichtet, wobei weiter zwei Flügel 46 zweier benachbarter Statorabdeckkörper 12,12' den Zwischenraum zwischen den Statorwicklungen 22 in der Einbauposition gemäß Fig. 20 überdecken.

Den Flügeln 46 rotorseitig vorgelagert sind an den Statorabdeckkörpern 12 von den Flügeln 46 abgewinkelt verlaufende Decksegmente 47 vorgesehen, die im Grundriss des Statorabdeckkörpers 12, 12' zusammen mit der rotorseitigen Stirnfläche des Wickelkernschuhes 15 etwa ein Kreissegment bilden.

Die so gebildeten Statorabdeckkörper 12, 12' mit den aufgebrachten Statorwicklungen 22 werden von der Statorinnenseite her nach radial außen auf den Statorkern 11 mittels Federzungen 48 aufgeklipst, wobei zur kollisionsfreien Anordnung zwei verschiedene Wickelkörper bzw. Statorkörper 12 und 12' vorgesehen sind, deren Rundungen im Bereich der Decksegmente 47 unterschiedliche Kreis-Segmente ausfüllen. So bilden die Statordeckkörper 12' über einen Winkel Alpha ein größeres Statorinnenflächen-Segment aus als die Statorabdeckkörper 12 (Winkel Beta).

Um eine nahezu homogene Statorinnenfläche 29 zu erzielen treten die Stirnflächen der aufeinander zu weisenden Decksegmente 47 zweier benachbarter Statorabdeckkörper 12 und 12' stumpf aneinander.

Durch die Federzungen 48 sind die Statorabdeckkörper 12,12' mechanisch arretiert. Nach einer Montage der als Brücke dienenden Lagerunterteil 13 und Lageroberteil 14 sind diese Rasthaken zusätzlich gegen Verrutschen in radialer Richtung gesichert.

Jeder Statorabdeckkörper 12 bzw. 12' besitzt zwei Steckaufnahmen 49 zur Aufnahme zweier Anschluss-Stifte 50. Letztere sind mit dem Wicklungsanfang bzw. Wicklungsende der zugeordneten Statorwicklungen 22 verbunden. Diese Anschlüsse ragen über die Spulen hinaus, so dass sie parallel zu den Rotor- bzw. Statorblechen innerhalb des Motors und demnach zwischen Rotorblech bzw. der als Haltescheibe 41 dienenden Geberscheibe 45 und dem zugewandten Lageroberteil 14 liegt.

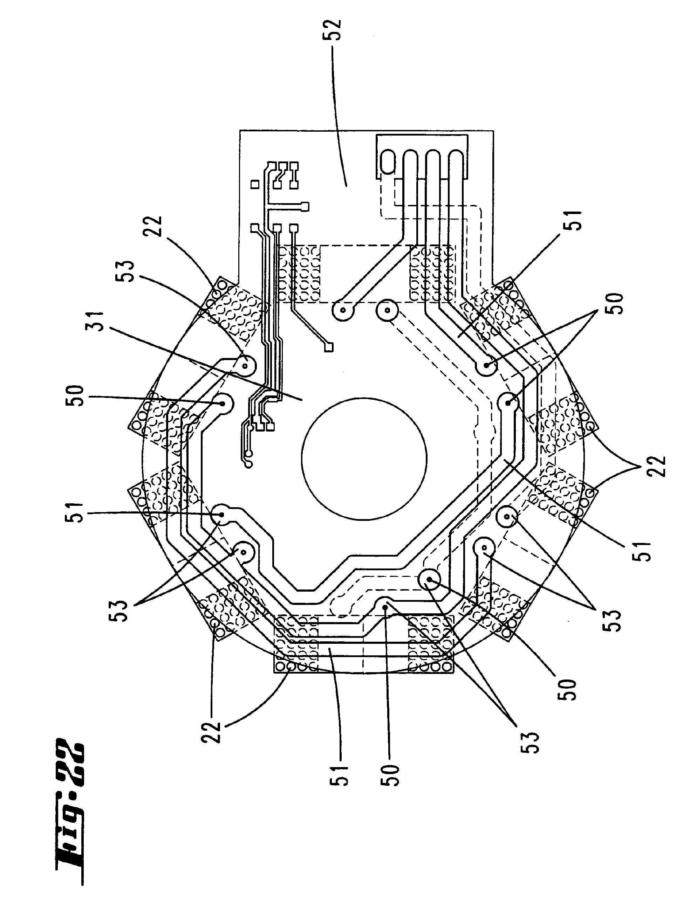

Auf dieser in Fig. 22 in einer Einzeldarstellung gezeigten Leiterplatte 31 befinden sich Leiterbahnen 51, die die Statorwicklungen 22 automatisch eindeutig miteinander verbinden.

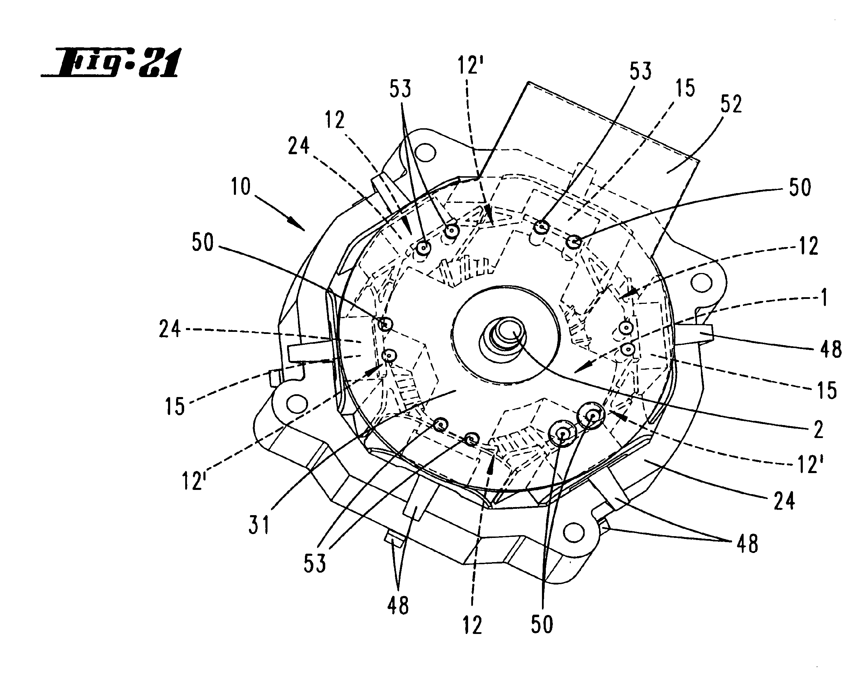

Wie insbesondere aus der Darstellung in Fig. 21 zu erkennen, weist hierbei die Leiterplatte 31 einen kreisscheibenförmigen Grundriss mit nach außen über den Statorkern 11 abragendem Anschlussabschnitt 42 auf, wobei der kreisscheibenförmige Grundriss im Durchmesser dem Innendurchmesser des Statorkerns 11 etwa angepasst ist. Im Bereich des Anschlussabschnittes 52 können über einen Platinenrandstecker die Spulenpaare eindeutig identifiziert werden. Ferner befindet sich auf der Leiterplatte 31 die Sensorik, die bei einem dreiphasigen Motor in der dargestellten Konfiguration mit sechs Statorpolen und vier Rotorpolen aus zwei oder drei Gabellichtschranken bestehen kann.

Die nicht dargestellten Lichtschranken stehen in bekannter Winkelbeziehung zu den einzelnen Statorspulen, so dass die phasenrichtige Zuordnung der Sensorsignale eindeutig realisiert wird. Über die Anschlüsse 53 der Statorwicklungen 22 wird die Leiterplatte 31 gleichzeitig ausgerichtet. Diese Anschlüsse 53 bzw. die hier durchtretenden Anschluss-Stifte 50 der Statorwicklungen 22 werden nach der Montage mit der Leiterplatte 31 verlötet.

Die Signale der Sensorik werden ebenfalls auf den Rand der Leiterplatte 31, d. h. in den Bereich des Anschlussabschnittes 52 gelegt, so dass auch hier wieder mit einem Platinenrandstecker oder ähnlichem die Verbindung zur Elektronik hergestellt werden kann.

Bei einem dreiphasigen Motor besteht ferner die Möglichkeit, eine 180°-Symmetrie auszunutzen, d. h. bezogen auf den Stator 10 existieren zwei mögliche Montagepositionen, die beide gültig sind.

Durch die zielgenaue Anordnung der Leiterplatte 31 zu den Statorwicklungen 22 ist die korrekte Verbindung der Statorwicklungen 22 ohne die Gefahr eines Verdrahtungsfehlers stets gegeben.

## Patentansprüche

1. Verfahren zur Regelung eines Reluktanzmotors mit einem Rotor (1) und einem Stator (10), wobei der Stator (10) einzelne Statorspulen (22) aufweist und je nach Belastung des Motors ein vordefinierter Strom in den Spulen (22) fließt, wobei abhängig von der Umdrehungszahl des Rotors (1) unterschiedliche Regelverfahren angewendet werden, nämlich bei kleineren Umdrehungszahlen durch die Vorgabe eines festen Drehfeldes, und dass bei Anlaufen des Motors bei Einleitung einer Rückdrehung des Rotors (1), die durch die Steuerungselektronik mittels für jede Phase vorhandener Lagegeber erkannt wird, keine Phase mehr bestromt wird und durch die Elektronik ein erneuter Anlaufvorgang eingeleitet wird.

2. Verfahren nach Anspruch 1, **dadurch gekennzeichnet, dass** bei höheren Drehzahlen ein Stromhysterese-Regelverfahren angewendet wird.

3. Verfahren nach einem der Ansprüche 1 oder 2, **dadurch gekennzeichnet, dass** bei Vorgabe eines Drehfeldes die Anpassung des Rotorstromes bzw. dessen Reduktion auf einen hinreichend großen Wert erfolgt.

4. Verfahren nach einem der Ansprüche 2 oder 3, **dadurch gekennzeichnet, dass** bei Stromhysterese-Regelverfahren ein Ein- und Abschalten der Wicklungen (22) mittels die Rotorstellung erkennender Sensoren erfolgt.

5. Verfahren nach einem der vorhergehenden Ansprüche, **dadurch gekennzeichnet, dass** der vordefinierte Strom durch Aufprägung einer konstanten Spannung erreicht wird und dass bei Aufprägung der Spannung die Zeit bis zum Erreichen des maximalen Stromwertes gemessen wird, als Maß der Belastung des Motors.

6. Verfahren nach einem der vorhergehenden Ansprüche, **dadurch gekennzeichnet, dass** der vordefinierte Strom durch Aus- und Einschalten einer positiven Spannung beibehalten wird.

7. Verfahren nach einem der vorhergehenden Ansprüche, **dadurch gekennzeichnet, dass** bei Erreichen eines Grenzstromes zur Verhinderung einer Motorüberlastung eine Drehzahlverringerung erfolgt.

8. Verfahren nach einem der Ansprüche 5 bis 7, **dadurch gekennzeichnet, dass** die Zeitmessung durch Starten eines internen Zählers beim Einschalten der Spannung und Anhalten des Zählers bei Überschreiten eines maximalen Stromwertes erfolgt.

9. Verfahren nach einem der vorhergehenden Ansprüche, **dadurch gekennzeichnet, dass**, ausgelöst durch Erreichen eines Minimal-Zählerwertes, eine Drehzahlreduzierung gesteuert wird.

10. Verfahren nach einem der vorhergehenden Ansprüche, **dadurch gekennzeichnet, dass** eine Steuerung der Statorströme abhängig von der gemessenen Zeit erfolgt.

11. Verfahren nach einem der vorhergehenden Ansprüche, **dadurch gekennzeichnet, dass** der vordefinierte Strom veränderbar ist.

12. Verfahren nach Anspruch 11, **dadurch gekennzeichnet, dass** der vordefinierte Strom stufenlos veränderbar ist.

13. Verfahren nach einem der vorhergehenden Ansprüche, **dadurch gekennzeichnet, dass** die Steuerung der Statorströme mittels eines Umrichters erfolgt.

14. Verfahren nach einem der vorhergehenden Ansprüche, **dadurch gekennzeichnet, dass** die Rotorstellung mittels einer Reflexlichtschranke ermittelt wird, wobei durch Ausrichtung der Lichtquelle auf den Rotor (1) unmittelbar die Reflexion des Rotors (1) zur Messung genutzt wird.

15. Verfahren nach einem der vorhergehenden Ansprüche, **dadurch gekennzeichnet, dass** für jede Phase ein Lagegeber vorhanden ist.

## Claims

1. Method for controlling a reluctance motor comprising a rotor (1) and a stator (10), the stator (10) having individual stator coils (22) and a predefined current flowing in the coils (22) according to the loading of the motor, whereby, different control methods are applied, depending on the number of revolutions of the rotor (1), to be specific by prescribing a fixed rotary field when the number of revolutions is relatively small, and that with starting the motor, at initiating of a back movement of the rotor (1), recognized by the circuitry by means of position indicators present for each phase, no phase is energized any more and a new start routine is initiated by the electronic.

2. Method according to claim 1, **characterized in that**, at higher rotational speeds, a current hysteresis control method is applied.

3. Method according to one of the claims 1 or 2, **characterized in that**, when prescribing a rotary field, the rotor current is adapted or reduced to an adequate value.

4. Method according to one of the claims 2 or 3, **characterized in that**, with the current hysteresis control method, the windings (22) are switched on and off by means of sensors detecting the rotor position.

5. Method according to one of the preceding claims, **characterized in that**, the predefined current is achieved by impressing on a constant voltage and **in that**, when the voltage is impressed, the time it takes to reach the maximum current value is measured, as a measure of the loading of the motor.

6. Method according to one of the preceding claims, **characterized in that**, the predefined current is retained by switching a positive voltage off and on.

7. Method according to one of the preceding claims, **characterized in that**, when a limit current for preventing a motor overload is reached, a reduction in rotational speed takes place.

8. Method according to one of the claims 5 to 7, **characterized in that**, the time measurement takes place by starting an internal counter when the voltage is switched on and stopping the counter when a maximum current value is exceeded.

9. Method according to one of the preceding claims, **characterized in that**, triggered by reaching a minimum counter value, a speed reduction is controlled.

10. Method according to one of the preceding claims, **characterized in that**, a control of the stator currents takes place according to the measured time.

11. Method according to one of the preceding claims, **characterized in that**, the predefined current is variable.

12. Method according to claim 11, **characterized in that**, the predefined current is steplessly variable.

13. Method according to one of the preceding claims, **characterized in that**, the control of the stator currents takes place by means of a converter.

14. Method according to one of the preceding claims, **characterized in that**, the rotor position is determined by means of a reflected light barrier, the reflection of the rotor (1) being used directly for measurement by alignment of the light source with the rotor (1).

15. Method according to one of the preceding claims, **characterized in that**, a position sensor is provided for each phase.

## Revendications

1. Procédé de contrôle d'un moteur à réluctance comprenant un rotor (1) et un stator (10), le stator (10) comprenant différentes bobines de stator (22) et un courant prédéfini circulant dans les bobines (22) en fonction de la charge du moteur, différents procédés de contrôle étant utilisés en fonction de la vitesse de rotation du rotor (1), à savoir, en cas de plus petites vitesses de rotation, par prédéfinition d'un champ tournant fixe, et, lorsque le moteur démarre, à l'activation d'une rotation inverse du rotor (1) détectée par l'électronique de commande au moyen d'indicateurs de position présents pour chaque phase, aucune phase n'étant plus alimentée en courant et un nouveau processus de démarrage étant activé par l'électronique.

2. Procédé selon la revendication 1, **caractérisé en ce que** lorsque les vitesses de rotation sont plus élevées, un procédé de contrôle à hystérèse de courant est utilisé.

3. Procédé selon l'une quelconque des revendications 1 ou 2, **caractérisé en ce qu'**un champ tournant est prédéfini, l'adaptation du courant de rotor ou sa réduction à une valeur suffisamment importante s'effectue.

4. Procédé selon l'une quelconque des revendications 2 ou 3, **caractérisé en ce que** pour un procédé de contrôle par hystérèse de courant, une mise en marche et hors service des enroulements (22) s'effectue au moyen de capteurs détectant la position du rotor.

5. Procédé selon l'une quelconque des revendications précédentes, **caractérisé en ce que** le courant prédéfini est obtenu par application d'une tension constante et **en ce que** lors de l'application de la tension, la durée d'obtention de la valeur de courant maximale est mesurée comme mesure de la sollicitation du moteur.

6. Procédé selon l'une quelconque des revendications précédentes, **caractérisé en ce que** le courant prédéfini est maintenu par mise en service et hors service d'une tension positive.

7. Procédé selon l'une quelconque des revendications précédentes, **caractérisé en ce que** lorsqu'un courant limite est obtenu, une réduction de la vitesse de rotation s'effectue pour empêcher une surcharge du moteur.

8. Procédé selon l'une quelconque des revendications 5 à 7, **caractérisé en ce que** la mesure de la durée s'effectue par démarrage d'un compteur interne lors de la mise en service de la tension et arrêt du compteur lorsqu'une valeur de courant maximale est dépassée.

9. Procédé selon l'une quelconque des revendications précédentes, **caractérisé en ce qu'**une réduction de la vitesse de rotation est commandée, déclenchée par l'obtention d'une valeur de compteur minimale.

10. Procédé selon l'une quelconque des revendications précédentes, **caractérisé en ce qu'**une commande des courants de stator s'effectue en fonction de la durée mesurée.

11. Procédé selon l'une quelconque des revendications précédentes, **caractérisé en ce que** le courant prédéfini peut être modifié.

12. Procédé selon la revendication 11, **caractérisé en ce que** le courant prédéfini peut être modifié en continu.

13. Procédé selon l'une quelconque des revendications précédentes, **caractérisé en ce que** la commande des courants de stator s'effectue au moyen d'un convertisseur.

14. Procédé selon l'une quelconque des revendications précédentes, **caractérisé en ce que** la position du rotor est déterminée au moyen d'une barrière lumineuse à réflexion, la réflexion du rotor (1) étant utilisée directement pour la mesure par orientation de la source de lumière vers le rotor (1).

15. Procédé selon l'une quelconque des revendications précédentes, **caractérisé en ce qu'**un indicateur de position est présent pour chaque phase.
